# EUROPÄISCHE PATENTSCHRIFT

(11) **EP 1 077 823 B1**
(45) Veröffentlichungstag und Bekanntmachung des Hinweises auf die Patenterteilung: **04.08.2004**
(21) Anmeldenummer: 99936245.2
(22) Anmeldetag: 12.05.1999
(51) Int. Cl.: B60J 10/00, B60J 10/04

(54) **SCHLIESSVORRICHTUNG MIT EINKLEMMSCHUTZ, INSBESONDERE FÜR EINE KRAFTFAHRZEUG-FENSTERSCHEIBE**
CLOSING DEVICE WITH ANTI-JAMMING PROTECTION, ESPECIALLY FOR A MOTOR VEHICLE WINDOW PANE
DISPOSITIF DE FERMETURE A PROTECTION ANTIBLOCAGE, NOTAMMENT POUR UNE VITRE DE FENETRE DE VEHICULE AUTOMOBILE

(30) Priorität: 15.05.1998 DE 29808826 U
(43) Veröffentlichungstag der Anmeldung: 28.02.2001
(73) Patentinhaber: SIEMENS AKTIENGESELLSCHAFT, 80333 München (DE)
(72) Erfinder: HELMERS, Claus, D-93326 Abensberg (DE); HOPFMUELLER, Gebhard, A-2540 Bad Vöslau (AT); FIEDLER, Rudolf, D-97980 Bad Mergentheim (DE)
(86) Internationale Anmeldenummer: PCT/DE1999/001448
(87) Internationale Veröffentlichungsnummer: WO 1999/059834

(56) Entgegenhaltungen:
- EP-A- 0 826 540
- DE-C- 19 502 033
- FR-A- 2 633 661
- US-A- 4 370 833

## Beschreibung

Die Erfindung bezieht sich auf eine Schließvorrichtung mit Einklemmschutz für eine Kraftfahrzeug-Fensterscheibe gemäß Anspruch 1; Schließvorrichtungen dieser Art werden insbesondere für Fensterheber- bzw. Schiebedachantriebe in Kraftfahrzeugen eingesetzt und enthalten einen Elektromotor, insbesondere Kommutatormotor, dessen Rotorwelle als Getriebewelle mit einem Schneckenrad kämmt, von dem das jeweilige Schließteil zwischen einer Öffnungsstellung und einer Schließstellung angetrieben wird; ein derartiger Stellantrieb ist z.B. durch die DE 89 03 714 U oder die WO 98/08286 bekannt.

In zunehmendem Maße sind derartige Stellantriebe mit einem Einklemmschutz derart auszurüsten, daß bei Gegenanlage eines Hindernisses gegen das durch eine motorische Fremdkraftbetätigung schließende Fenster- bzw. Schiebedach der Schließvorgang abgebrochen bzw. das Schließteil in entgegengesetzter Bewegungsrichtung angetrieben wird. Zur Erkennung eines gegenliegenden Hindernisses wird üblicherweise auf eine dadurch bedingte erhöhte Motorbelastung oder Motordrehzahlreduzierung zurückgegriffen und in einer Steuerung für den Elektromotor entsprechend verarbeitet (DE 33 03 590 C2 bzw. DE 42 16 040 A1). Im Fall eines durch DE-A-33 03 590 bekannten motorbetätigten Fensterhebers ist eine den Motor steuernde Recheneinheit derart programmiert, daß der Antriebsmotor stillgesetzt bzw. umgepolt wird, wenn die Leistung die Toleranzgrenze überschreitet, wobei für die letzte Phase der Wegstrecke die Toleranzgrenze so hoch angesetzt ist, daß der vom Anschlag der Scheibe an dem oberen Fensterrahmen verursachte Leistungsanstieg keine Umpolung des Motors bewirkt.

Bei der Detektierung eines Einklemmfalls können Schwierigkeiten dadurch auftauchen, daß bei der Überwachung der Motorbelastung bzw. der Motordrehzahl im Störfall nicht zwischen einem tatsächlichen Einklemmfall einerseits oder z.B. einem Scheibenschwerlauf, insbesondere einem Dichtungseinlauf der Scheibe in ihre Schließstellung, andererseits unterschieden werden kann. Es sind daher auch bereits Verfahren zur elektronischen Überwachung des Öffnungs- und Schließvorganges von Fensterhebern und Schiebedächern in Kraftfahrzeugen bekannt (DE PS 31 36 746), bei denen der beim öffnungs- bzw. Schließvorgang zu durchlaufende Weg in drei Bereiche aufgeteilt wird, nämlich in einen ersten Bereich von "völlig geöffnet bis halb geöffnet", in einen zweiten Bereich von "etwa halb geöffnet bis fast völlig geschlossen" und in einen dritten Bereich von "fast völlig geschlossen bis völlig geschlossen", wobei im letzten Bereich zur Verhinderung einer Fehldetektierung aufgrund eines schwergängigen Dichtungseinlaufs der Einklemmschutz vollständig abgeschaltet ist.

Gemäß Aufgabe vorliegender Erfindung soll ein verbesserter von einem Einklemmschutz ohne Fehlauslösung überwachbarer Antrieb des Schließteils bei Erreichen seiner Schließstellung mit Einlaufen in den Bereich einer Dichtleiste gewährleistet werden. Die Lösung dieser Aufgabe gelingt erfindungsgemäß durch eine Schließ vorrichtung gemäß Anspruch 1; vorteilhafte Ausgestaltungen der Erfindung sind jeweils Gegenstand der Unteransprüche.

Eine Scheibenschließvorrichtung mit den drei ersten die mechanische Ausbildung der Dichtleiste betreffenden Teilmerkmalen des Anspruchs 1 ist durch die FR 26 33 661 A1 bzw. US-A-4 370 833 an sich bekannt; spezifische Auslegungen unter Bezugnahme auf die Vorschriften eines Einklemmschutzes werden nicht angesprochen.

Erfindungsgemäß kann bei einem fremdkraftbetätigten, insbesondere motorischen, Antrieb des Schließteils mit Einklemmschutz auf einfache Weise gewährleistet werden; daß nicht be reits vor Erreichen des Bereichs von "fast völlig geschlossen bis völlig geschlossen" aufgrund einer Antriebsbelastung durch Reibanlage oder Anschlaganlage der Dichtleiste eine die Einklemmerkennung verfälschende Motorbelastung für den fremdkraftbetätigten Antrieb vorliegt; dabei ist der Bereich "fast völlig geschlossen bis völlig geschlossen" nach einer geltenden Sicherheitsregel durch Unterschreiten eines noch minimalen Spaltes von 4mm über den gesamten Schließbegrenzungsverlauf definiert. Zum Ausgleich von Toleranzen bleibt dabei der Einklemmschutz im Anfangsbereich des Eintauchens des Schließteils in die Dichtleiste noch eingeschaltet.

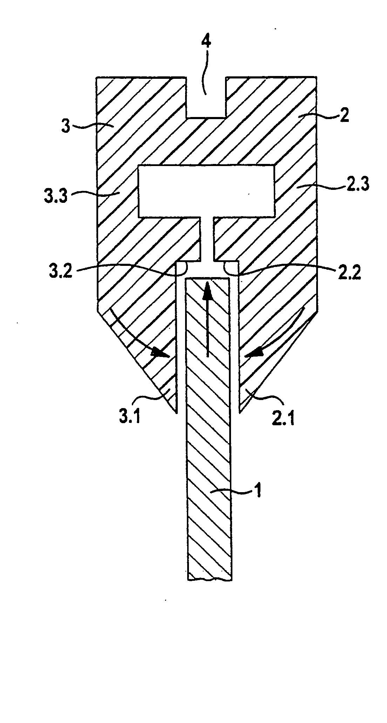

Die Erfindung sowie weitere vorteilhafte Ausgestaltungen der Erfindung gemäß Merkmalen der Unteransprüche werden im folgenden anhand eines schematisch dargestellten Ausführungsbeispiels in der Zeichnung näher erläutert.

Die Zeichnung zeigt im Querschnitt eine zum Einsatz in einen Fensterrahmen eines Kraftfahrzeugfensters einzusetzenden Dichtleiste 2;3, in die im unteren Teil eine kurz vor Erreichen ihrer Schließstellung dargestellte Fensterscheibe als Schließteil 1 mit ihrem Außenrand eintaucht. Die eine erste Dichtleistenhälfte 2 ist zweckmäßigerweise mit der zweiten Dichtleistenhälfte 3 der Dichtleiste 2;3 im Sinne eines einstückigen Stranggußpreßteils unter Bildung einer offenen Nut 4 verbunden, in die ein die Dichtung aufnehmendes Rahmenteil eines die Fensterscheibe als Schließteil 1 aufnehmenden Fensterrahmens eingreifen kann.

Die im unteren Teil der Dichtleiste 2;3 angeformten Dichtlippen 2.1 bzw.3.1 sind in der Zeichnung in reibbelastungsfreiem Abstand zu der als Schließteil 1 eintauchenden Fensterscheibe dargestellt; bei der Antriebsbewegung der Fensterscheibe in der eingezeichneten Pfeilrichtung schlägt diese in ihrer Schließ-Endstellung mit ihrer Oberkante an querstehende Dichtleisten-Anschlagteile 2.2 bzw. 3.2 an; durch eine scharnierartige Verjüngung zwischen dem unteren, die Dichtlippen 2.1;3.1 als auch die Dichtleisten-Anschlagteile 2.2;3.2 umfassenden, im wesentlichen verformungsfreien Dichtleistenteil einerseits und dem oberen, im wesentlichen biegesteifen Rahmenaufnahmeteil der Dichtleiste 2;3 werden durch den Anschlag der Fensterscheibe an die Dichtleisten-Anschlagteile 2.2 bzw.3.2 die Dichtlippen 2.1 bzw.3.1 in eingetragener Pfeilrichtung derart verschwenkt, daß sie an der in ihrer Schließendlage befindliche Fensterscheibe dicht anliegen.

Durch die erfindungsgemäß vorgesehene, noch nicht zu einer Reibbelastung bzw. Anschlagbelastung des fremdkraftbetätigten, insbesondere motorischen Antriebs des Schließteils führende Eintauchtiefe der Dichtleiste mit entsprechend hinsichtlich der Länge ihrer freien Enden dimensionierten Dichtlippen ist gewährleistet, daß das Schließteil weiter hemmungsfrei geschlossen werden kann bis der verbleibende Spalt zwischen Schließteilrand und das Schließteil aufnehmendem Rahmenrand mit Dichtleiste auch an der letzten Stelle verschwindet bzw. die minimale Grenze von 4mm unterschritten hat, obwohl toleranzbedingt er bereits zuvor an einer anderen Stelle in die Dichtleiste eingetaucht sein kann.

## Patentansprüche

1. Schließvorrichtung mit Einklemmschutz, für eine Kraftfahrzeug-Fensterscheibe oder ein Kraftfahrzeug-Schiebedach
- mit bei Annäherung an eine Schließstellung mit seinem Außenrand in eine Dichtleiste (2;3) eintauchenden fremdkraftbetätigten, z.B. motorisch angetriebenen, Schließteil (1);
- mit einer derartigen Ausbildung der Dichtleiste (2;3), daß zumindest eine an einer Seite des Schließteils (1) zur Dichtungsanlage vorgesehene Dichtlippe (2.1 bzw.3.1) zunächst in reibbelastungsfreiem Abstand zu dem eintauchenden Schließteil (1) gehalten und erst bei Erreichen von dessen Schließstellung durch Anschlag des Schließteils (1) an die Dichtleiste (2;3) in Dichtungsanlage zu diesem bringbar ist;
- mit einem von dem Schließteil (1) bei Erreichen seiner Schließstellung betätigbaren Dichtleisten-Anschlagteil (2.2 bzw.3.2), über das jeweils die zumindest eine erste bzw. zweite Dichtlippe (2.1 bzw.3.1) in ihre Dichtungsanlage an dem Schließteil (1) verschwenkbar ist,
- mit einer derartigen reibbelastungsfreien bzw. anschlagfreien jeweiligen Eintauchtiefe des Schließteils (1) in die Dichtleiste (2;3), daß auch bei outlich unterschichlichem Eintauchen des Schließteils (1) in die Dichleiste (2;3) über deren gesamte Erstreckung der sich ein einen ersten Bereich "völlig geöffnet bis halb geöffnet" und einen zweiten Bereich "etwas halb geöffnet bis fast völlig geschlossen" auschließende sicherheitsrelevante dritte Bereich "fast völlig geschlossen bis völlig geschlossen" mit damit verbundener Abschaltung des Einklemmschutzes zumindest erreicht ist.

2. Schließvorrichtung nach Anspruch 1
- mit einer einstückigen, sowohl die Dichtleisten-Anschlagteile (2.2 bzw.3.2) als auch die verschwenkbaren Dichtlippen (2.1 bzw.3.1) enthaltenden Elastomer-Dichtleiste (2;3).

3. Schließvorrichtung nach Anspruch 1 und/oder 2
- mit jeweils einem im wesentlichen biegesteif mit der verschwenkbaren Dichtlippe (2.1 bzw.3.1) verbundenen Dichtleisten-Anschlagteil (2.2 bzw.3.2));
- mit einem scharnierartigen Übergang zwischen der Dichtlippe (2.1 bzw.3.1) und dem damit verbundenen Dichtleisten Anschlagteil (2.2 bzw.3.2) einerseits und einer Dichtleisten-Aufnahme (4) in einem Rahmenteil andererseits.

4. Schließvorrichtung nach zumindest einem der Ansprüche 1-3 mit einem auch im Einlaufbereich des Schließteils (1) in die Dichtleiste (2. bzw.3) zunächst noch wirksamen Einklemmschutz.

## Revendications

1. Dispositif de fermeture avec protection contre le coincement pour une vitre de fenêtre de véhicule à moteur ou un toit ouvrant de véhicule à moteur, comportant :
- une partie de fermeture (1) commandée par une force indépendante, par exemple par un moteur pénétrant par son bord extérieur, lors de l'approche d'une position de fermeture, dans une garniture d'étanchéité (2;3);
- une constitution de la garniture d'étanchéité (2;3) telle qu'au moins une lèvre d'étanchéité (2.1 et 3.1) prévue sur un côté de la partie de fermeture (1) pour l'installation d'étanchéité est tout d'abord maintenue à une distance sans charge de friction par rapport à la partie de fermeture (1) à introduire et ne peut être amenée en installation d'étanchéité par rapport à celle-ci par butée de la partie de fermeture (1) sur la garniture d'étanchéité (2;3) que lorsque sa position de fermeture est atteinte;
- une partie de butée de la garniture d'étanchéité (2.2 et 3.2) actionnable par la partie de fermeture (1) lorsque sa position de fermeture est atteinte, par laquelle respectivement au moins la première ou la deuxième lèvre d'étanchéité (2.1 et 3.1) peut être déplacée dans son installation d'étanchéité sur la partie de fermeture (1),
- une profondeur respective de pénétration sans charge de friction et sans butée de la partie de fermeture (1) dans la garniture d'étanchéité (2;3), telle que, également pour une profondeur de pénétration à un endroit différent de la partie de fermeture (1) dans la garniture d'étanchéité (2;3), par son extension totale, la troisième zone relevant de la sécurité qui se raccorde à une première zone "complètement ouvert à à demi ouvert" et une deuxième zone "à peu près à demi ouvert à presque complètement fermé", la troisième zone relevant de la sécurité "presque complètement fermé à complètement fermé" est atteint au moins avec débranchement lié à celle-ci de la protection contre le coincement.

2. Dispositif de fermeture selon la revendication 1, comportant :
une garniture d'étanchéité d'une seule pièce (2;3) en élastomère contenant les parties de butée de la garniture d'étanchéité (2.2 et 3.2) ainsi que les lèvres d'étanchéité (2.1 et 3.1) déplaçables.

3. Dispositif de fermeture selon les revendications 1 et/ou 2, comportant :
- respectivement une partie de butée de garniture d'étanchéité (2.2 et 3.2) reliée de manière résistant essentiellement à la flexion à la lèvre d'étanchéité déplaçable (2.1 et 3.1).
- un passage en forme de charnière entre la lèvre d'étanchéité (2.1 et 3.1) et la partie de butée (2.2 et 3.2) de la garniture d'étanchéité qui lui est reliée, d'une part, et une partie réceptrice (4) de la garniture d'étanchéité dans une partie de cadre.

4. Dispositif de fermeture selon l'une au moins des revendications 1 à 3, comportant :
- une protection contre le coincement également tout d'abord encore efficace dans une zone de pénétration de la partie de fermeture (1) dans la garniture d'étanchéité (2 et 3).

## Claims

1. A closing device with anti-jamming protection for a motor vehicle window pane or a motor vehicle sliding sunroof,
- having a power-activated, e.g. motor-driven, closing part (1), the external edge of which is inserted into a sealing strip (2; 3) when it approaches a closed position;
- having the sealing strip (2; 3) designed in such a way that at least one sealing lip (2.1 or 3.1) provided on one side of the closing part (1) for the purpose of sealing contact is held initially at a friction load-free distance from the closing part (1) which is being inserted and can only be brought into sealing contact with said closing part (1) when the latter reaches its closing position as a result of coming into contact with the sealing strip (2; 3);
- having a sealing strip stop piece (2.2 or 3.2) which can be actuated by the closing part (1) when it reaches its closing position, via which stop piece in each case the at least one first or second sealing lip (2.1 or 3.1) can be tilted into its sealing contact with the closing part (1),
- having a friction load-free or stop-free respective insertion depth of the closing part (1) into the sealing strip (2; 3) of such a kind that even with locally different insertion of the closing part (1) into the sealing strip (2; 3) the safety-relevant third range which follows a first range "fully open to half open" and a second range "about half open to almost fully closed" has, over its entire extension, has at least reached "almost fully closed to fully closed" with associated deactivation of the anti-jamming protection.

2. The closing device as claimed in claim 1,
- having a single-piece elastomer sealing strip containing both the sealing strip stop pieces (2.2 or 3.2) and the tiltable sealing lips (2.1 or 3.1).

3. The closing device as claimed in claim 1 and/or 2,
- having in each case a sealing strip stop piece (2.2 or 3.2) joined in an essentially non-flexing manner to the tiltable sealing lip (2.1 or 3.1);
- having a hinge-like transition between the sealing lip (2.1 or 3.1) and the associated sealing strip stop piece (2.2 or 3.2) joined to it on the one hand and a sealing strip retainer (4) in a frame part on the other hand.

4. The closing device as claimed in at least one of claims 1 to 3,
having an initially still effective anti-jamming protection also in the insertion area of the closing part (1) into the sealing strip (2 or 3).
